Europäisches Patentamt

European Patent Office

Office européen des brevets

(19)

(11) Numéro de publication : **0 661 552 A1**

## (12) DEMANDE DE BREVET EUROPEEN

(21) Numéro de dépôt : **94403051.9**

(22) Date de dépôt : **28.12.94**

(51) Int. Cl.⁶ : **G01S 3/808,** G01S 5/22

(30) Priorité : **30.12.93 FR 9315884**

(43) Date de publication de la demande :
**05.07.95 Bulletin 95/27**

(84) Etats contractants désignés :
**DE GB**

(71) Demandeur : **THOMSON-CSF**
**173, Boulevard Haussmann**
**F-75008 Paris (FR)**

(72) Inventeur : **Loison, Jean-Yves**
**Thomson-CSF,**
**SCPI,**
**B.P. 329**
**F-92402 Courbevoie Cedex (FR)**

(74) Mandataire : **Desperrier, Jean-Louis et al**
**THOMSON-CSF**
**SCPI**
**B.P. 329**
**50, rue Jean-Pierre Timbaud**
**F-92402 Courbevoie Cédex (FR)**

(54) **Procédé de localisation acoustique d'un véhicule remorqué par un bateau.**

(57)   L'invention concerne les procédés de localisation acoustique d'un véhicule sous-marin (103) remorqué par un bateau tracteur (101).

Elle consiste à utiliser deux hydrophones (106, 107) fixés sur le véhicule sous-marin (103) de part et d'autre de celui-ci pour goniométrer le bruit intrinsèque émis par le bateau tracteur (101). Le traitement de goniométrie consiste à extraire les raies basse fréquence du spectre de bruit du bateau et à retenir celles dont les niveaux sont les plus élevés, pour effectuer un calcul de déphasage permettant de déterminer l'angle de gisement.

Elle permet d'obtenir une précision suffisante sur la position du véhicule remorqué par rapport au bateau pour pouvoir cartographier la quasi totalité du plateau continental.

FIG.3

EP 0 661 552 A1

La présente invention se rapporte aux procédés qui permettent de localiser de manière acoustique les véhicules, couramment appelés "poissons" remorqués derrière un bateau, par exemple pour faire naviguer sous la surface de la mer à proximité du fond marin un sonar destiné à cartographier ce fond.

Pour cartographier les fonds sous-marins, on utilise souvent des sonars du type latéral à haute résolution. Cette haute résolution est obtenue en utilisant des fréquences ultra-sonores élevées, ce qui nécessite, en raison de l'absorption importante dans le milieu marin de ces ondes, de faire défiler le sonar à proximité du fond. Comme les bateaux utilisés à cet effet naviguent en surface au-dessus d'une hauteur d'eau pouvant dépasser les 100m, le moyen le plus pratique consiste à placer le sonar, ou tout au moins ses antennes et les circuits qui sont directement reliés à ces antennes, dans un véhicule submersible qui est remorqué par le bateau à l'aide d'un câble électroporteur dans lequel passent les signaux du sonar plus ou moins préalablement traités. Ce véhicule submersible comprend des moyens, par exemple des ailerons mobiles actionnés par des servo-commandes, qui permettent de le faire naviguer avec une immersion déterminée en survolant le fond de la mer à une distance sensiblement constante.

Compte tenu de la précision nécessaire et obtenue par un tel sonar, il faut que la trajectoire suivie par le véhicule porteur du sonar puisse être repérée avec une précision importante de l'ordre du mètre afin de pouvoir caler les unes par rapport aux autres les images obtenues lors de passages adjacents et de pouvoir en outre procéder à des comparaisons des images obtenues lors d'une campagne avec celles obtenues lors des campagnes précédentes.

Pour cela on sait maintenant déterminer la trajectoire du bateau avec une précision remarquable, en utilisant par exemple les systèmes de positionnement par satellite du type GPS. Compte tenu de la manière dont le véhicule sous-marin est remorqué, sa position par rapport au bateau remorqueur est susceptible de varier de manière importante et fortement variable en fonction de nombreux paramètres tels que la vitesse de remorquage et les fluctuations aléatoires des courants au sein de la mer. On sait ainsi qu'à partir d'une immersion relativement faible, quelques dizaines de mètres, les courants en surface peuvent être complètement opposés à ceux en profondeur et ceci d'une manière parfaitement erratique et quasiment impossible à prévoir. Ce dernier effet est relativement peu sensible dans la direction d'avancement du bateau puisque la vitesse propre de celui-ci peut être nettement supérieure à celle des courants, mais dans le sens transversal cette influence est très importante puisque dans ce sens le bateau ne bouge pas. Dans ces conditions la précision obtenue sur la trajectoire du bateau est totalement dégradée au niveau de la trajectoire suivie par le véhicule sous-marin remorqué, alors que c'est bien la trajectoire de celui-ci qui est le paramètre important à connaître.

Pour simplifier les moyens de localisation et leur mise en oeuvre, et donc pour minimiser le coût de ces moyens, la demanderesse utilise maintenant un dispositif dans lequel on modélise la déformée du câble en calculant le profil que présente celui-ci dans un plan vertical, en fonction de l'immersion du véhicule remorqué (mesurée par un capteur de pression), de la longueur du câble filée, de la vitesse du bateau par rapport à l'eau (obtenue soit directement par un loch Doppler fonctionnant sur la réverbération marine soit par une combinaison de la mesure de la vitesse par rapport au fond et d'une estimation du courant) et des paramètres hydrodynamique variables du véhicule transmis par télémétrie depuis celui-ci, par exemple l'angle des ailerons permettant de maintenir une immersion constante. Le calcul en temps réel de cette déformée à l'aide des équations physiques de l'hydrodynamique, éventuellement corrigées par des paramètres déduits de l'expérience, permet ainsi d'obtenir la distance entre le bateau et le véhicule, projetée dans un plan horizontal passant par l'axe de celui-ci. Le gisement du véhicule par rapport à l'axe du bateau est obtenu par mesure de l'angle de tir du câble au niveau du chaumard dont sort le câble pour plonger dans la mer, par rapport à la ligne de foi du bateau. On utilise pour mesurer cet angle un appareillage mécanique spécifique monté sur le câble. Cette distance et cet angle permettent de localiser le véhicule de manière relativement précise, soit en coordonnées circulaires, soit en coordonnées cartésienne par un simple changement de coordonnées.

Un tel système donne une précision suffisante pour une longueur de câble d'environ 200 m, correspondant à une immersion de l'ordre de 70 m. Pour pouvoir augmenter l'immersion sans augmenter de manière excessive la traction sur le câble, et en maintenant une vitesse suffisante du bateau remorqueur, il est nécessaire d'augmenter la longueur de câble filé. Si on souhaitait ainsi pouvoir atteindre une immersion de l'ordre de 200 m pour pouvoir couvrir la totalité du plateau continental, il serait nécessaire de filer au moins 400 m de câble. Dans ces conditions l'imprécision sur la localisation transversale, provenant en particulier du caractère rudimentaire du système de mesure utilisé, et aussi du fait que cette mesure suppose implicitement que le câble reste droit dans le plan horizontal, devient inacceptable.

Une solution consistant à modéliser également la déformée du câble dans ce plan horizontal entraînerait une forte augmentation de la complexité des calculs et nécessiterait en outre de connaître le profil du courant sur toute la hauteur d'immersion, ce qui nécessiterait d'utiliser un appareil certes connu mais onéreux et rare.

Pour pallier ces inconvénients, l'invention propose un procédé de localisation acoustique d'un véhicule remorqué au bout d'un câble par un bateau, principalement caractérisé en ce que l'on mesure l'angle de gisement θ du poisson par rapport à la ligne de foi du bateau en utilisant un ensemble d'hydrophones portés par le poisson pour obtenir cet angle par goniométrie à partir du bruit intrinsèque émis par le bateau.

Selon une autre caractéristique, on traite les signaux reçus par les hydrophones pour en extraire les raies de la partie basse fréquence du spectre de ces signaux.

Selon une autre caractéristique, on effectue sur les raies ainsi sélectionnées un seuillage permettant de sélectionner les raies présentant la plus forte amplitude.

Selon une autre caractéristique, on détermine la distance I du poisson au bateau en calculant la déformée du câble en fonction des paramètres hydrodynamiques du poisson et du câble.

Selon une autre caractéristique, on détermine l'angle de site du poisson par rapport au bateau tracteur par un procédé de goniométrie du bruit du bateau semblable à celui utilisé pour des déterminer l'angle de gisement.

Selon une autre caractéristique, on utilise la valeur de l'angle de site ainsi obtenue pour améliorer le calcul de la déformée du câble tracteur.

D'autres particularités et avantages de l'invention apparaitront clairement dans la description suivante, présentée à titre d'exemple non limitatif en regard des figure annexées, qui représentent:

- La figure 1, une vue de côté d'un bateau tractant un poisson;
- la figure 2, une vue de dessus de ce bateau et de ce poisson;
- la figure 3, une vue de dessus d'un poisson modifié selon l'invention; et
- la figure 4, un schéma d'un dispositif de mise en oeuvre du procédé selon l'invention.

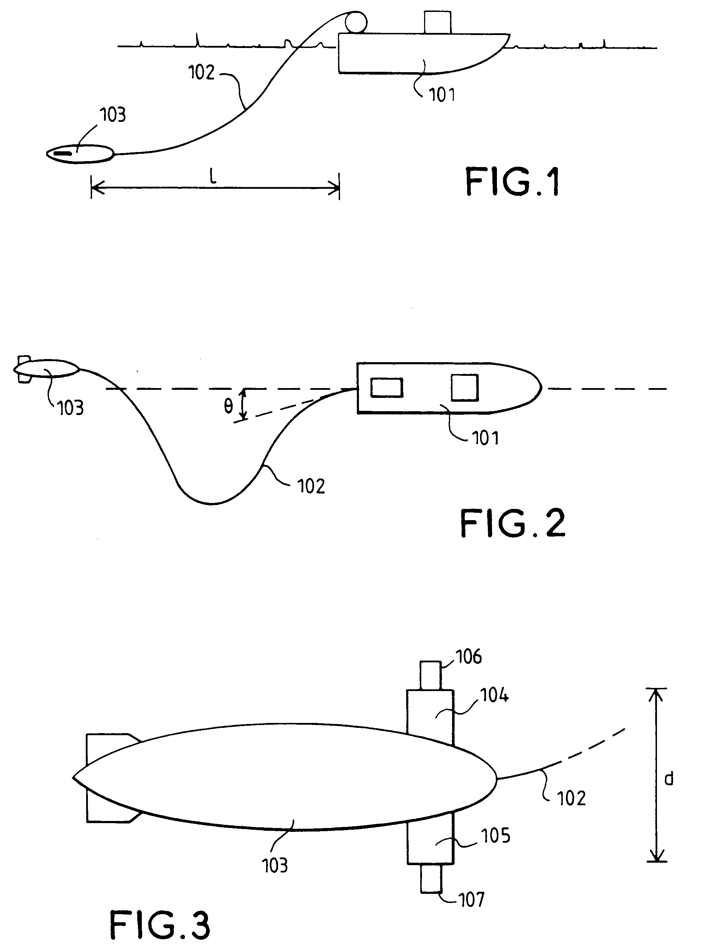

On a représenté sur la figure 1 une vue de côté d'un bâteau 101 naviguant sur la surface de la mer et remorquant à l'aide d'un câble 102 un poisson immergé 103. Le poisson est situé à une distance I du bateau, qui peut être obtenue par exemple par un calcul en temps réel de la déformée dans le sens vertical du câble 102.

Ces mêmes éléments sont représentés sur la figure 2 en vue de dessus, où l'on remarque que le câble 102 présente des ondulations importantes dans le sens horizontal, dues par exemple à des variations des courants selon la profondeur d'immersion du câble. Dans ces conditions la mesure de l'angle entre la ligne de foi du bateau et la direction du poisson ne peut pas être obtenue d'une manière correcte par un dispositif mécanique simple situé au niveau du raccordement du câble avec le bateau car celui-ci donnerait un angle θ pouvant être totalement différent de l'angle réel, comme représenté dans l'exemple de la figure.

Le poisson 103 représenté sur la figure 3 est alors modifié selon l'invention en plaçant à droite et à gauche de celui-ci deux hydrophones 106 et 107 qui sont éloignés de l'axe du poisson en les fixant aux extrémités de deux supports 104 et 105. A titre d'exemple de réalisation ces deux supports pourront être les ailes dont sont souvent munis ce type de poisson remorqué. A défaut on pourrait utiliser par exemple des perches suffisamment minces pour ne pas perturber de manière sensible l'équilibre hydrodynamique du poisson, mais pouvant néanmoins supporter des efforts dus aux mouvements de celui-ci dans l'eau. On pourrait parfaitement réaliser de telles perches par exemple en utilisant des matériaux composites.

Ces hydrophones sont de préférence relativement directionnels et leurs faces parlantes sont orientées pour recevoir essentiellement le bruit émis par le bateau. Dans ces conditions il est inutile de prévoir à bord du bateau un émetteur de signaux spécifiques pour localiser le poisson, ce qui permet une simplification remarquable du système.

Les signaux de ces deux hydrophones sont alors soit transmis avec les autres signaux du sonar porté par le poisson sur le câble électro-porteur pour pouvoir être traités à bord du bâtiment remorqueur, soit traités directement par des circuits d'exploitation placés dans le poisson. Dans ce dernier cas seul le résultat obtenu, c'est-à-dire la mesure de l'angle θ, est transmis au bateau par l'intermédiaire du câble de remorquage.

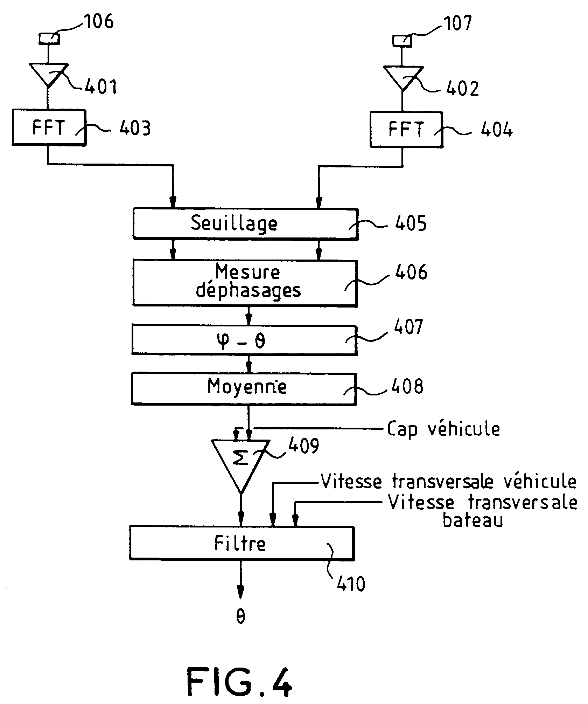

On a représenté sur la figure 4 le schéma synoptique du système de traitement permettant d'obtenir à partir des signaux des hydrophones l'angle θ.

Les signaux des hydrophones 106 et 107 sont amplifiés par des amplificateurs 401 et 402 permettant d'obtenir les niveaux nécessaires aux traitements ultérieurs.

On extrait ensuite les raies de la partie basse fréquence du spectre du bruit reçu par les hydrophones, par exemple les raies situées en-dessous de 100 Hz, par exemple en effectuant sur les signaux amplifiés une transformée de Fourier rapide FFT à l'aide des circuits 403 et 404.

Les raies ainsi obtenues sont ensuite transmises à un circuit de seuillage qui permet d'éliminer toutes celles dont le niveau est inférieur à une valeur déterminée relativement importante.

De cette manière on n'obtient dans la pratique que des signaux provenant effectivement du bateau remorqueur. On sait en effet que les bateaux émettent essentiellement des raies de forte amplitude à basse fréquence et le bateau remorqueur étant a priori le seul situé à une distance relativement faible du poisson, le seuillage permet d'éliminer les bruits provenant d'autres bateaux, situés en principe à une distance nettement plus grande.

Ces raies étant ainsi sélectionnées, elles sont appliquées à un circuit 406 qui permet de mesurer pour chaque raie le déphasage $\varphi$, compris entre -180° et + 180°, entre une raie provenant de l'un des hydrophones et la raie homologue provenant de l'autre hydrophone. Ces hydrophones étant séparés par une distance d, et $\lambda$ étant la longueur d'onde correspondant à la raie sélectionnée, l'angle $\theta$ est donné par la formule :

$$\theta = arc\ \cos\left(\frac{\varphi\lambda}{2\pi d}\right)$$

Cette formule impose entre autres une valeur maximale à la distance d qui doit être inférieure ou égale à la moitié de la longueur d'onde la plus grande utilisée.

Ces calculs sont effectués dans un circuit 407, et comme bien entendu, compte tenu des différentes fluctuations et du bruit, la valeur de l'angle $\theta$ obtenue instantanément fluctue de manière assez importante, on effectue une moyenne des valeurs obtenues pour cet angle $\theta$, tant entre celles obtenues avec les différentes raies utilisées, que entre celles obtenues sur une durée relativement longue, dans un circuit de moyennage 408. On peut en effet considérer que le poisson oscille de manière lente au bout du câble de remorquage, ce qui permet d'obtenir une moyenne correspondant à un grand nombre de mesure et donc une précision assez forte sur la valeur de l'angle $\theta$.

A partir de cet angle $\theta$, on peut alors obtenir le gisement géographique du bateau par rapport au véhicule, en ajoutant dans un circuit de sommation 409 le cap du véhicule, obtenu par exemple à l'aide d'un compas magnétique situé dans le véhicule et couramment utilisé pour d'autres besoins.

On peut enfin obtenir une précision encore supérieure sur la valeur de $\theta$ en procédant dans un circuit 410 à un traitement de filtrage connu, qui permet de prendre en compte la vitesse transversale du véhicule par rapport au fond marin, mesurée par exemple avec un loch Doppler, et la vitesse transversale du bateau par rapport à ce même fond, elle-même mesurée soit par un loch Doppler soit directement à partir des moyens de radionavigation permettant de restituer la trajectoire du bateau.

Le procédé ainsi décrit permet donc de localiser le véhicule sous-marin remorqué par rapport au bateau avec une précision suffisante pour obtenir une cartographie correcte des fonds sous-marins de la quasi totalité du plateau continental. A titre de variante, on peut utiliser pour localiser le bateau dans le sens vertical un dispositif identique mais comportant des hydrophones situés au-dessus et en dessous du poisson. Ceci permet d'obtenir l'angle de site du poisson par rapport au bateau, et compte tenu de la longueur filée du câble d'améliorer le calcul de la déformée dans le sens vertical de ce câble pour permettre une meilleure estimation de la distance I.

## Revendications

1. Procédé de localisation acoustique d'un véhicule (103) remorqué au bout d'un câble (102) par un bateau (101), caractérisé en ce que l'on mesure l'angle de gisement $\theta$ du poisson (103) par rapport à la ligne de foi du bateau (101) en utilisant un ensemble d'hydrophones (106, 107) portés par le poisson pour obtenir cet angle par goniométrie à partir du bruit intrinsèque émis par le bateau.

2. Procédé selon la revendication 1, caractérisé en ce que l'on traite les signaux reçus par les hydrophones (106, 107) pour en extraire les raies de la partie basse fréquence du spectre de ces signaux.

3. Procédé selon la revendication 2, caractérisé en ce que l'on effectue sur les raies ainsi sélectionnées un seuillage permettant de sélectionner les raies présentant la plus forte amplitude.

4. Procédé selon l'une quelconque des revendications 1 à 3, caractérisé en ce que l'on détermine la distance I du poisson au bateau en calculant la déformée (102) du câble en fonction des paramètres hydrodynamiques du poisson et du câble.

5. Procédé selon la revendication 4, caractérisé en ce que l'on détermine l'angle de site du poisson (103) par rapport au bateau tracteur (101) par un procédé de goniométrie du bruit du bateau semblable à celui utilisé pour des déterminer l'angle de gisement.

6. Procédé selon la revendication 5, caractérisé en ce que l'on utilise la valeur de l'angle de site ainsi obtenue pour améliorer le calcul de la déformée du câble tracteur (102).

FIG.1

FIG.2

FIG.3

FIG.4

EP 0 661 552 A1

**Office européen des brevets**

# RAPPORT DE RECHERCHE EUROPEENNE

Numero de la demande

EP 94 40 3051

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-2 113 391 (INSTITUTE FRANCAIS DU PETROLE)<br>* page 1, ligne 49 - page 2, ligne 27; figures 1-3 * | 1,5 | G01S3/808<br>G01S5/22 |
| A | US-A-3 953 827 (LE MOAL ET AL)<br>* colonne 3, ligne 35 - colonne 4, ligne 65; figure 4 * | 1,4 | |
| A | US-A-4 425 635 (YAMAMOTO ET AL)<br>* colonne 1, ligne 44 - ligne 62; figure 16 * | 1 | |
| A | DE-A-32 39 403 (FRIED. KRUPP GMBH)<br>* revendication 1; figure 1 * | 1 | |

**DOMAINES TECHNIQUES RECHERCHES (Int.Cl.6)**

G01S
G01V

Le présent rapport a été établi pour toutes les revendications

| Lieu de la recherche | Date d'achèvement de la recherche | Examinateur |
|---|---|---|
| LA HAYE | 4 Avril 1995 | Haffner, R |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

7